# EUROPÄISCHE PATENTSCHRIFT

(11) **EP 2 407 378 B1**
(45) Veröffentlichungstag und Bekanntmachung des Hinweises auf die Patenterteilung: **27.05.2015**
(21) Anmeldenummer: 11173715.1
(22) Anmeldetag: 13.07.2011
(51) Int. Cl.: B64D 11/00

(54) **Aufenthaltsmodul mit separatem Privatbereich**
Rest module with separate private area
Habitacle avec partie privative séparée

(30) Priorität: 14.07.2010 DE 102010027122; 14.07.2010 US 364124 P
(43) Veröffentlichungstag der Anmeldung: 18.01.2012
(73) Patentinhaber: Airbus Operations GmbH, 21129 Hamburg (DE)
(72) Erfinder: Mosler, Michael, 31830 Plaisance du Touch (FR); Ulbrich-Gasparevic, Jovan, 25421 Pinneberg (DE)
(74) Vertreter: Kopf, Korbinian Paul

(56) Entgegenhaltungen:
- EP-A2- 1 279 593
- US-A1- 2006 065 783

## Beschreibung

### Verwandte Anmeldungen

Die vorliegende Anmeldung beansprucht die Priorität der US Provisional Patentanmeldung Nr. 61/364,124, eingereicht am 14. Juli 2010, und der deutschen Patentanmeldung Nr. 10 2010 027 122.5, eingereicht am 14. Juli 2010, deren Inhalte hierin durch Referenz inkorporiert werden.

### Gebiet der Erfindung

Die Erfindung betrifft die Kabinenbereiche von Transportmitteln. Insbesondere betrifft die Erfindung ein Aufenthaltsmodul für Mitglieder einer Transportmittelbesatzung, eine Anordnung mit einem Aufenthaltsmodul und zwei Monumenten, sowie ein Luftfahrzeug mit einem Aufenthaltsmodul oder einer derartigen Anordnung.

### Technologischer Hintergrund

In heutigen Luftfahrzeugen werden Aufenthaltsmodule für Passagiere oder für Mitglieder einer Flugzeugbesatzung verwendet, die beispielsweise in einem Scheitelbereich der Flugzeugkabine angebracht sind. In diesem Falle spricht man auch von sog. Overhead Crew Rest Compartments. In diesen Aufenthaltsmodulen können sog. "Changing Areas", also Raumbereiche zum Umziehen der Besatzungsmitglieder, vorgesehen sein. Der in den Aufenthaltsmodulen hierfür zur Verfügung stehende Raum ist begrenzt.

Um Abtrennungen innerhalb der Kabine bereitzustellen, können Sichtschutzrollos verwendet werden. Sichtschutzrollos sind z. B. aus der DE 10 2009 005 905 A1 bekannt. DE 10 2007 035 681 A1 und US 2009/0289146 A1 beschreiben Aufenthaltsmodule zur Unterbringung von Besatzungsmitgliedern eines Flugzeugs. Es sind andockbare Teilmodule vorgesehen, mit deren Hilfe der bereitgestellte Raum für die Besatzung erweiterbar ist.

US 2006/0065783 A1 beschreibt ein Aufenthaltsmodul für eine Transportmittelkabine, in dessen unterem Bereich Trolleys aufbewahrt werden können.

EP 1 279 593 A2 beschreibt ein Aufenthaltsmodul einer Transportmittelkabine eines Luftfahrzeugs mit einer im Überkopfbereich angeordneten Einheit, die über eine Leiter zugänglich ist. Die Luke, durch welche man die Einheit erreicht, kann visuell abgetrennt werden.

### Zusammenfassung der Erfindung

Es ist eine Aufgabe der Erfindung, ein Aufenthaltsmodul mit einem flexibel einsetzbaren Privatbereich anzugeben.

Es sind ein Aufenthaltsmodul für Mitglieder einer Transportmittelbesatzung, beispielsweise eine Luftfahrzeugbesatzung, und zur Anbringung in einem Scheitelbereich einer Transportmittelkabine, eine Anordnung mit einem solchen Aufenthaltsmodul, einem ersten Monument und einem zweiten Monument, sowie ein Luftfahrzeug mit einem Aufenthaltsmodul oder einer oben und im Folgenden beschriebenen Anordnung gemäß den Merkmalen der unabhängigen Patentansprüche angegeben. Weiterbildungen der Erfindung ergeben sich aus den Unteransprüchen.

Die hier und im Folgenden beschriebenen Ausführungsbeispiele betreffen gleichermaßen das Aufenthaltsmodul, die Anordnung und das Luftfahrzeug. In anderen Worten lassen sich die im Folgenden beispielsweise im Hinblick auf das Aufenthaltsmodul beschriebenen Merkmale auch in der Anordnung und im Luftfahrzeug implementieren, und umgekehrt.

Gemäß einem ersten Aspekt der Erfindung ist ein Aufenthaltsmodul für Mitglieder einer Transportmittelbesatzung und zur Anbringung in einem Scheitelbereich einer Transportmittelkabine angegeben, welches ein erstes Sichtschutzrollo aufweist. Das erste Sichtschutzrollo kann wahlweise einen eingefahrenen Zustand und einen ausgefahrenen Zustand einnehmen. Im ausgefahrenen Zustand, bei dem das Sichtschutzrollo heruntergezogen ist, bildet es eine erste visuelle Abtrennung eines ersten Gangbereichs von einem zweiten Gangbereich (beispielsweise der Passagierkabine) aus, wenn das Aufenthaltsmodul in dem Scheitelbereich der Flugzeugkabine installiert ist. Der erste Gangbereich befindet sich hierbei unterhalb des Aufenthaltsmoduls, wenn das Aufenthaltsmodul in dem Scheitelbereich der Transportmittelkabine installiert ist, und der zweite Gangbereich schließt sich an den ersten Gangbereich an.

In anderen Worten kann das erste Sichtschutzrollo, welches am oder im Aufenthaltsmodul installiert ist, ausgezogen werden und somit als visuelle Abtrennung zu einem Passagierkabinenbereich eingesetzt werden.

Bei dem Transportmittel kann es sich beispielsweise um ein Luftfahrzeug, wie Helikopter, Flugzeug oder Zeppelin, handeln, oder aber auch um ein Schienenfahrzeug, ein Straßenfahrzeug oder ein Wasserfahrzeug.

Gemäß einem Ausführungsbeispiel der Erfindung weist das Aufenthaltsmodul weiterhin ein zweites Sichtschutzrollo auf, welches zum wahlweisen Einnehmen eines eingefahrenen Zustands und eines ausgefahrenen Zustands ausgeführt ist. Das zweite Sichtschutzrollo bildet im ausgefahrenen Zustand eine zweite visuelle Abtrennung des ersten Gangbereichs von einem dritten Gangbereich aus, wenn das Aufenthaltsmodul in dem Scheitelbereich der Transportmittelkabine installiert ist. Bei dem dritten Gangbereich handelt es sich, wie auch bei dem zweiten Gangbereich, um einen an den ersten Gangbereich sich anschließenden, also angrenzenden, Gangbereich.

Beispielsweise befindet sich der erste Gangbereich zwischen dem zweiten und dem dritten Gangbereich.

Gemäß einem weiteren Ausführungsbeispiel der Erfindung handelt es sich bei dem ersten Gangbereich um zumindest einen Teilbereich eines Quergangs zwischen zwei Längsgängen einer Flugzeugkabine (sog. "Cross-Aisle").

Gemäß einem weiteren Ausführungsbeispiel der Erfindung weist das Aufenthaltsmodul weiterhin zwei Nuten auf, die zum seitlichen Führen des ersten Sichtschutzrollos oder des zweiten Sichtschutzrollos ausgeführt sind. Es können natürlich noch zwei weitere Nuten vorgesehen sein, die zum seitlichen Führen des jeweils anderen Sichtschutzrollos ausgeführt sind.

Diese Nuten sind beispielsweise in das Aufenthaltsmodul eingefräst oder anderweitig in den Körper des Aufenthaltsmoduls eingebracht, so dass keine separaten Schienen erforderlich sind.

Die seitlichen Nuten stellen eine Führung des Rollos für den gesamten Bereich, in dem das Rollo über dem Crew Rest Compartment verstaut ist, bereit.

Es ist möglich (für den Fall das Monumente vorhanden sind), diese Führungsschiene bis zum Boden laufen zu lassen. Somit könnte man sich die ausklappbaren Paneele sparen. Dies stellt eine einfache seitliche, visuelle Abdichtung dar.

Gemäß einem weiteren Ausführungsbeispiel der Erfindung weist das Aufenthaltsmodul eine äußere Oberfläche auf, wobei das erste Sichtschutzrollo und/oder das zweite Sichtschutzrollo im eingefahrenen Zustand über zumindest einen Teilbereich der äußeren Oberfläche geschoben ist.

Das Sichtschutzrollo befindet sich im eingefahrenen Zustand also nicht im Inneren des Aufenthaltsmoduls, sondern auf dessen Oberseite.

Gemäß einem weiteren Ausführungsbeispiel der Erfindung weist das Aufenthaltsmodul weiterhin eine rechte Spaltabdeckung und eine linke Spaltabdeckung auf, die beim Überführen des Sichtschutzrollos von dem eingefahrenen Zustand in den ausgefahrenen Zustand in dem Sichtschutzrollo integriert sind. Die rechte Spaltabdeckung und die linke Spaltabdeckung können nach dem Einnehmen des ausgefahrenen Zustands des Sichtschutzrollos aus diesem ausgefahren (beispielsweise herausgezogen) werden, um somit einen rechten Spalt und einen linken Spalt visuell abzudichten. Diese beiden Spalte befinden sich jeweils zwischen dem Sichtschutzrollo und einem daneben angeordneten Monument oder einer anderweitigen Inneneinrichtung (beispielsweise einer Trennwand).

Gemäß einem weiteren Ausführungsbeispiel der Erfindung handelt es sich bei dem Sichtschutzrollo um ein flexibles Rollo.
Gemäß einem weiteren Ausführungsbeispiel der Erfindung ist das Sichtschutzrollo als Rolllade oder als Jalousie ausgebildet, also segmentiert.

Die Spaltabdeckungen können ebenso segmentiert sein. Auch ist es möglich, dass die Spaltabdeckungen (Paneelen) aus flexiblem oder elastischem Material bestehen, beispielsweise Silikon.

Alternativ zu den paneelartigen Spaltabdeckungen können auch Schienen an den neben dem Sichtschutzrollo angeordneten Monumenten oder Inneneinrichtungen angebracht sein, in welchen das Sichtschutzrollo geführt wird.

Gemäß einem weiteren Aspekt der Erfindung ist eine Anordnung mit einem oben und im Folgenden beschriebenen Aufenthaltsmodul, sowie einem ersten Monument und einer weiteren Inneneinrichtung, beispielsweise einem zweiten Monument, angegeben.

Diese Anordnung ist in der Lage, einen vom Aufenthaltsmodul separierten und flexibel einsetzbaren Privatbereich zum Umziehen eines Besatzungsmitglieds auszubilden, indem das oder die Sichtschutzrollos bei Bedarf heruntergefahren werden.

Gemäß einem weiteren Ausführungsbeispiel der Erfindung sind die beiden Monumente und die beiden Sichtschutzrollos im ausgefahrenen Zustand, ggf. zusammen mit weiteren Elementen, wie einem oder mehreren Trennwänden oder anderen Inneneinrichtungselementen, ausgeführt, einen abgetrennten Bereich (Privatbereich) einzugrenzen und zu definieren. Dieser Privatbereich kann zum Kleidungswechsel eines Besatzungsmitglieds verwendet werden. Auch kann der Privatbereich so groß gestaltet sein, dass sich mehrere Besatzungsmitglieder gleichzeitig umziehen können.

Dieser Privatbereich kann, muss aber nicht, vollständig visuell abgegrenzt sein.

Gemäß einem weiteren Ausführungsbeispiel der Erfindung handelt es sich bei dem ersten Monument um ein Aufstiegsmodul für das Aufenthaltsmodul und bei dem zweiten Monument um eine Galley.

Gemäß einem weiteren Aspekt der Erfindung ist ein Luftfahrzeug mit einem oben und im Folgenden beschriebenen Aufenthaltsmodul oder einer oben und im Folgenden beschriebenen Anordnung angegeben.

Auch kann das Aufenthaltsmodul in einem anderen Transportmittel eingebaut sein. Bei diesem Transportmittel kann es sich beispielsweise um einen Bahnwaggon, ein Luftschiff, ein Wasserfahrzeug oder ein Straßenfahrzeug handeln.

Im Folgenden werden mit Verweis auf die Figuren Ausführungsbeispiele der Erfindung beschrieben.

### Kurze Beschreibung der Figuren

Fig. 1A zeigt eine Seitenansicht eines Aufenthaltsmoduls gemäß einem Ausführungsbeispiel der Erfindung.
Fig. 1B zeigt eine Detaildarstellung eines Bereiches des Aufenthaltsmoduls der Fig. 1A.
Fig. 1C zeigt ein Rollladenelement 150 eines Rollos eines Aufenthaltsmoduls gemäß einem Ausführungsbeispiel der Erfindung.
Fig. 2 zeigt eine Anordnung gemäß einem Ausführungsbeispiel der Erfindung.
Fig. 3 zeigt die Anordnung der Fig. 2 mit teilweise ausgefahrenem Sichtschutzrollo.
Fig. 4 zeigt die Anordnung der Fig. 2 mit vollständig ausgefahrenem Sichtschutzrollo.
Fig. 5A zeigt eine Anordnung gemäß einem weiteren Ausführungsbeispiel der Erfindung.
Fig. 5B zeigt ein Detail der Anordnung der Fig. 5A.
Fig. 5C zeigt ein weiteres Detail der Anordnung der Fig. 5A.
Fig. 6A zeigt einen Grundriss einer Anordnung gemäß einem Ausführungsbeispiel der Erfindung.
Fig. 6B zeigt einen Grundriss einer Anordnung gemäß einem weiteren Ausführungsbeispiel der Erfindung.
Fig. 6C zeigt einen Grundriss einer Anordnung gemäß einem weiteren Ausführungsbeispiel der Erfindung.
Fig. 7 zeigt ein Luftfahrzeug gemäß einem Ausführungsbeispiel der Erfindung.

### Detaillierte Beschreibung von Ausführungsbeispielen

Die Darstellungen in den Figuren sind schematisch und nicht maßstäblich.

In der folgenden Figurenbeschreibung werden für die gleichen oder ähnlichen Elemente die gleichen Bezugsziffern verwendet.

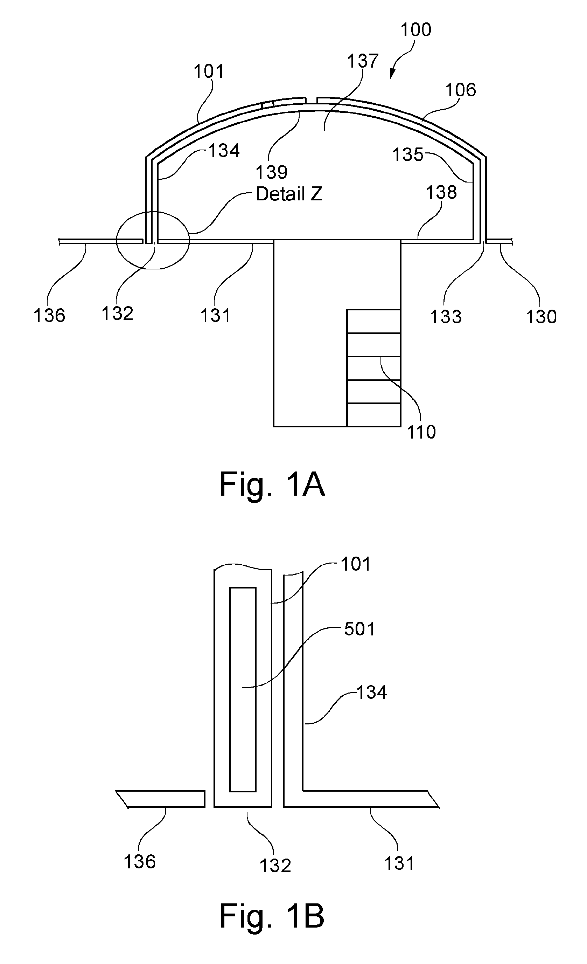

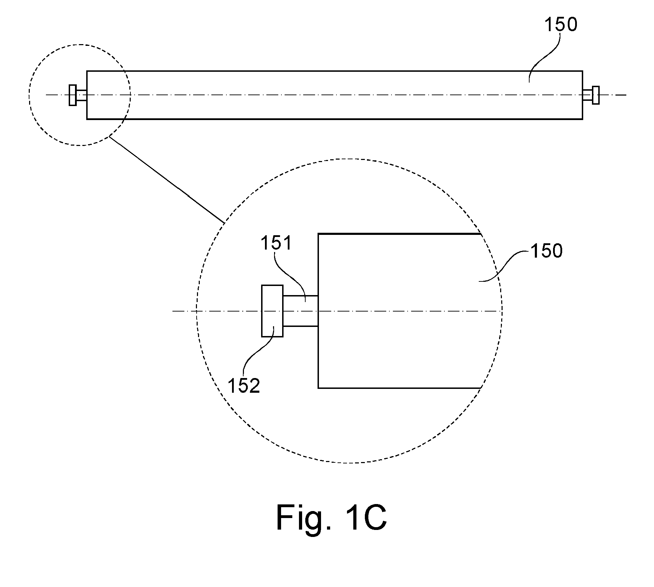

Fig. 1 zeigt eine Seitenansicht eines Aufenthaltsmoduls gemäß einem Ausführungsbeispiel der Erfindung.

Die Erfindung basiert auf der Idee, ein Crew Rest Compartment (Aufenthaltsmodul), welches in den Überkopfbereich des Flugzeugs eingesetzt wird (sog. Overhead Crew Rest Compartment), mit einer Vorrichtung auszustatten, welche es gestattet, dass hiermit ein Privatbereich zum Umziehen von Besatzungsmitgliedern ausgebildet werden kann. Diese Vorrichtung weist beispielsweise ein oder mehrere Sichtschutzrollos auf, die an dem Aufenthaltsmodul angebracht sind, ggf. in Kombination mit einem oder mehreren Monumenten und/oder Inneneinrichtungen. Bei den Monumenten kann es sich beispielsweise um eine Galley und einen Treppeneingang zum Crew Rest Compartment (Stairhouse), auch Aufstiegsmodul genannt, handeln.

Das Aufenthaltsmodul 100 weist links und rechts neben dem Aufenthaltsbereich flexible Vorrichtungen 101, 106, beispielsweise in Form von Sichtschutzrollos, auf. Die Funktion dieser flexiblen Vorrichtungen 101, 106 kann ähnlich sein wie die Funktion eines herkömmlichen Rollos. Beispielsweise sind die Sichtschutzrollos segmentiert ausgeführt. Die Sichtschutzrollos 101, 106 verlaufen zwischen entsprechenden Nuten, die in das Aufenthaltsmodul eingefräst sind oder anderweitig darauf angebracht sind. Die Sichtschutzrollos 101, 106 können zusammen mit dem Aufenthaltsmodul ausgeliefert werden, so dass eine nachträgliche Installation nicht erforderlich ist. In diesem Fall können die Rollos als optionale Wahlmöglichkeit in das Modul integriert werden.

Beispielsweise verlaufen die beiden Rollos 101, 106 über die gesamte Fläche des oberen Bereichs 137 des Aufenthaltsmoduls. In diesem Falle können die Maße der Rollos etwa 500 mm mal 2000 mm betragen. Die Maße können auch größer oder kleiner ausfallen.

In den linken und rechten Deckenelementen 136, 131 bzw. 138, 130, welche die Kabinendecke und teilweise den Boden des oberen Bereichs 137 des Aufenthaltsmoduls 100 darstellen, befinden sich Öffnungen 132, 133, durch welche das entsprechende Rollo 101, 106 heruntergelassen werden kann.

Weiterhin weist der obere Bereich 137 des Aufenthaltsmoduls linke und rechte Wandelemente 134, 135 sowie ein oberes Deckenelement 139 auf. Die Elemente 134, 135 und 139 weisen eine äußere Oberfläche auf, auf der die Rollos 101, 106 entlang laufen.

Zum Einstieg in das Aufenthaltsmodul ist ein Aufstiegsmodul 110, auch Treppenhaus oder Stairhouse genannt, vorgesehen.
Fig. 1B zeigt das Detail z der Fig. 1A. Es ist gut zu erkennen, wie das linke Sichtschutzrollo 101 von oben kommend beim Herablassen durch die Öffnung 132 zwischen den Deckenelementen 136, 131 hindurchgeführt wird. Das Deckenelement 131 bildet hierbei einen Teil des Aufenthaltsmoduls und das Deckenelement 136 bildet einen Teil der Kabinendecke.

Das Rollo 101 weist ein herausziehbares Paneel 501 auf, das im Inneren des Rollos, auf seiner Vorderseite oder auf seiner Rückseite angeordnet sein kann.

Fig. 1C zeigt ein Rollladenelement 150 des Rollos 101 oder 106. An den beiden Seiten des Elements 150 ist jeweils eine Lagerung 151 und ein sich daran anschließendes Gleiter- oder Rollenelement 152 angeordnet. Das Gleiter- oder Rollenelement 152 gleitet oder rollt in seitlichen Führungsschienen oder Nuten, die am Aufenthaltsmodul 100 angebracht oder darin eingebracht sind.

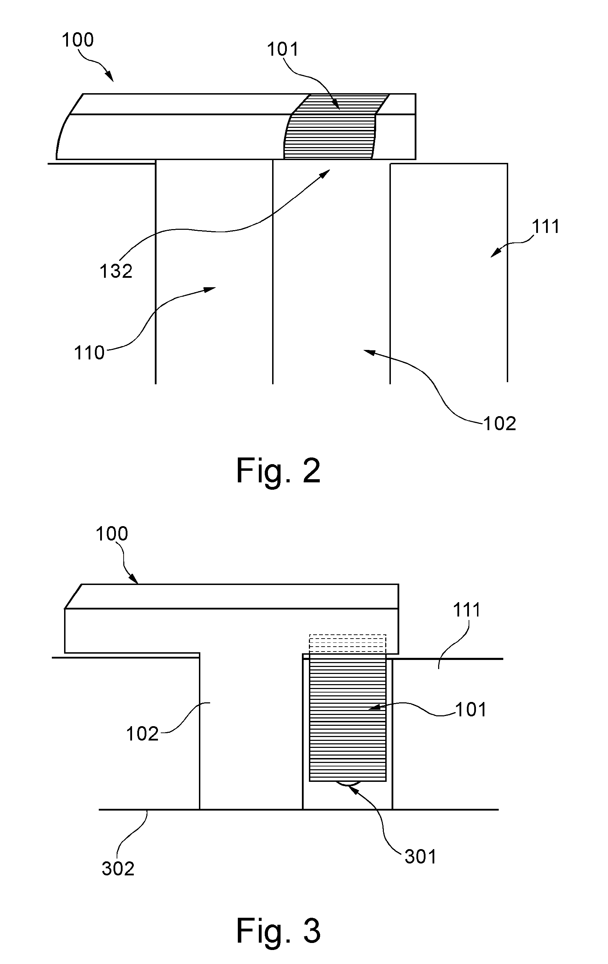

Fig. 2 zeigt eine seitliche Ansicht eines Aufenthaltsmoduls 100, das in einer Passagierkabine eines Transportmittels, zum Beispiel einem Luftfahrzeug, eingebaut ist. Das Sichtschutzrollo 101 befindet sich, wie auch in der Fig. 1A, im eingefahrenen Zustand, da es nicht verwendet wird. Weiterhin ist ein zweites Monument 111 zu erkennen, bei dem es sich beispielsweise um eine Galley handelt. Das Bezugszeichen 102 bezeichnet den Gangbereich, der vom Passagierbereich durch das Sichtschutzrollo 101 visuell abgetrennt werden soll. Hierbei handelt es sich beispielsweise um einen Quergang ("Cross Aisle").

Fig. 3 zeigt das Aufenthaltsmodul 100 der Fig. 2, bei dem das Sichtschutzrollo 101 teilweise heruntergefahren ist. Das Sichtschutzrollo 101 weist hierfür eine Schlaufe 301 zum Herausziehen des Sichtschutzrollos aus der Öffnung 132 in der Decke auf. Das Bezugszeichen 302 bezeichnet den Kabinenboden.

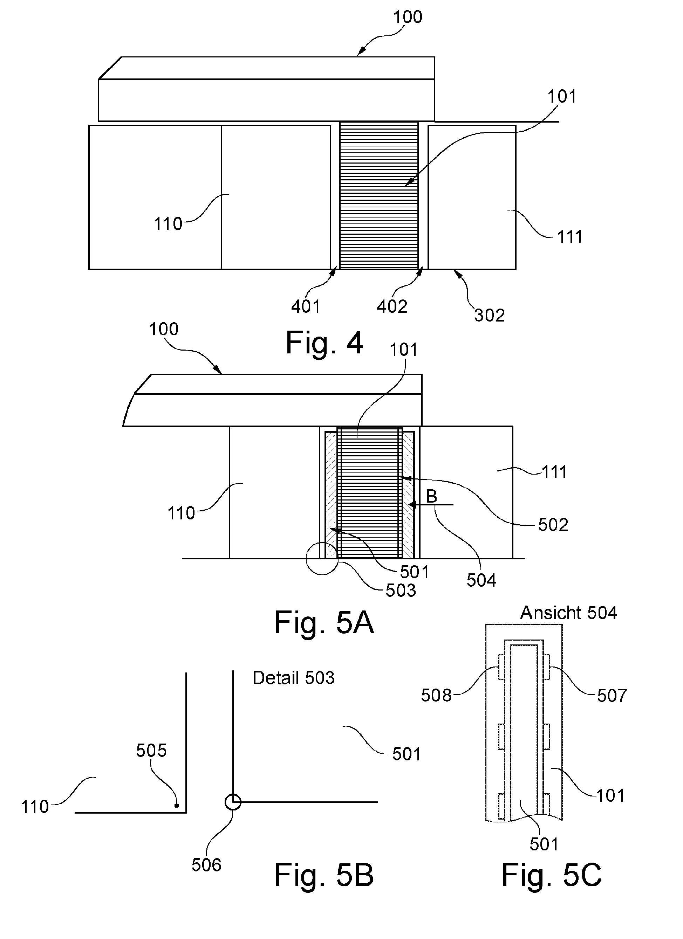

Fig. 4 zeigt das Aufenthaltsmodul 100 der Fig. 2, bei dem nun das Sichtschutzrollo 101 vollständig bis zum Boden 302 hinuntergezogen ist. In anderen Worten nimmt nun das Sichtschutzrollo 101 den ausgefahrenen Zustand ein. Links und rechts des Sichtschutzrollos 101 befinden sich das Aufstiegsmodul 110 bzw. das Galleymodul 111. Um die Sichtspalte 401, 402 zwischen dem Sichtschutzrollo 101 und dem Aufstiegsmodul 110 bzw. dem Galleymodul 111 visuell abzudichten, können entsprechende seitlich ausfahrbare Paneele 501, 502 (siehe Fig. 5A) vorgesehen sein. Alternativ ist es möglich, dass an den Inneneinrichtungselementen, die links und rechts neben dem Sichtschutzrollo 101 angeordnet sind, entsprechende Führungsschienen für das Sichtschutzrollo angebracht sind.

Fig. 5A zeigt ein Aufenthaltsmodul 100 mit einem Sichtschutzrollo 101, welches solche seitlich ausfahrbaren Paneele 501, 502 aufweist.

Um die variablen Spalten 401, 402 blickdicht zu machen, sind im Rollo 101 sowohl links als auch rechts an Schienen gelagerte "Paneele" 501, 502 vorgesehen, die ausgefahren, bzw. ausgeklappt werden können, wenn sich das Sichtschutzrollo 101 im ausgefahrenen Zustand befindet.

Diese Paneele 501, 502 stehen im ausgefahrenen / ausgeklappten Zustand beispielsweise nicht näher als 100 mm seitlich aus dem Rollo 101 hervor. Beispielsweise weisen die Paneele 501, 502 an ihren unteren, äußeren Ecken Ösen 506 auf (siehe Fig. 5B, welche eine Detaildarstellung 503 des unteren Bereichs des seitlichen Paneels 501 zeigt). Entsprechende Gegenstücke 505, beispielsweise in Form von einfachen Pins oder Bolzen, sind an den benachbarten Inneneinrichtungselementen (Monumente 110, 111 oder Trennwände) vorgesehen. Diese Pins 505 ragen aus den Monumenten oder Trennwänden hervor. Es handelt sich um einfache zylinderförmige Pins, die eine Einfräsung in der Mitte haben, um die Öse 506 zu halten.

Fig. 5C zeigt eine seitliche Ansicht 504 auf einen Teilbereich des Sichtschutzrollos 101 (in Richtung des Pfeils 504 in Fig. 5A). Es sind mehrere Gleitschienen 507, 508 innerhalb des einen Hohlraum ausbildenden Rollos 101 vorgesehen. Diese Gleitschienen 507, 508 führen die im Hohlraum angeordnete Paneele 501.

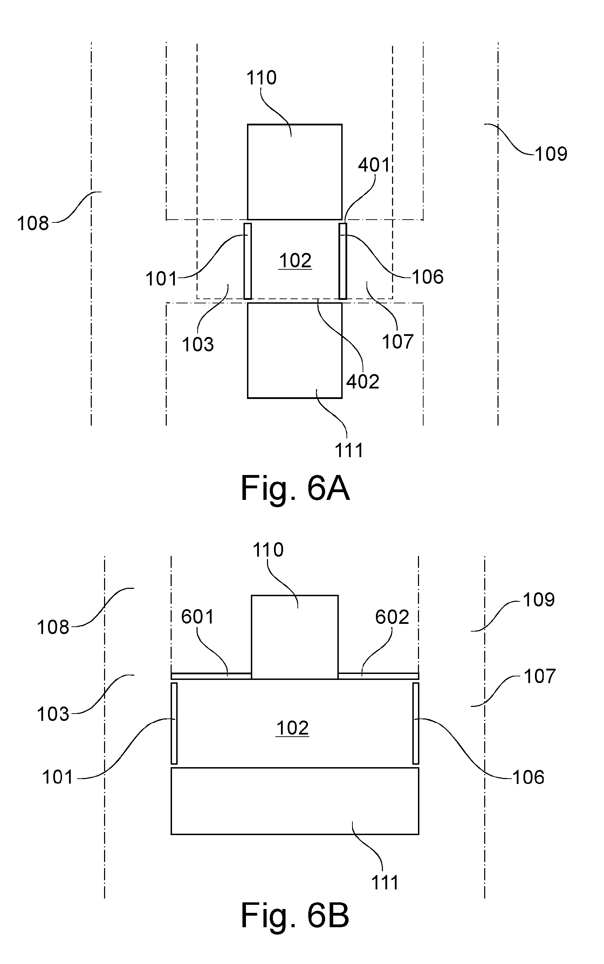

Fig. 6A zeigt einen Grundriss einer Anordnung gemäß einem Ausführungsbeispiel der Erfindung. Es ist die Grundfläche des Aufstiegsmoduls 110 zu sehen, sowie die Grundfläche eines Galleymoduls 111. Zwischen diesen beiden Modulen 110, 111 befindet sich der Privatbereich bzw. erste Gangbereich 102, der visuell von anderen Gangbereichen 103, 107 abgegrenzt werden soll. Um diese Abgrenzung zu erreichen, können die Sichtschutzrollos 101, 106 heruntergelassen werden. Die Spalten (siehe beispielsweise Spalte 401, 402) zwischen den Sichtschutzrollos und den Monumente 110, 111 können über entsprechende Spaltabdeckungen, die in / an den Rollos integriert sind und herausfahrbar / ausklappbar sind, abgedichtet werden. Auch ist es möglich, dass die Monumente 110, 111 seitliche Führungsschienen aufweisen, in denen die Rollos beim Herausfahren geführt werden. In diesem Fall sind keine weiteren Spaltabdeckungen erforderlich.

An den ersten Gangbereich 102, der abgegrenzt werden soll, schließen sich links und rechts die zweiten und dritten Gangbereiche 103, 107 an. Diese Bereiche zusammengenommen bilden den sog. Quergang (Cross-Aisle) der Passagierkabine. An diesen Quergang schließen sich linke und rechte Hauptgänge 108, 109 an, die parallel zur Längsachse des Flugzeugs ausgerichtet sind.

Fig. 6B zeigt einen Grundriss einer Anordnung gemäß einem weiteren Ausführungsbeispiel der Erfindung. An das Aufstiegsmodul 110 schließen sich linke und rechte Trennwände 601, 602 an, die dann zusammen mit den Modulen 110, 111 und den Sichtschutzrollos 101, 106 den Privatbereich 102 ausbilden. Wie in den Fig. 6A und 6B zu sehen, grenzen die verschiedenen Elemente 110, 111, 101, 106 und ggf. auch 601, 602 den Privatbereich 102 vollständig ein und definieren ihn. Es kann aber auch vorgesehen sein, dass ein oder beide Trennwände 601, 602 fehlen, so dass der Privatbereich nur teilweise visuell eingegrenzt ist. In diesem Fall würden die ausklappbaren Paneele größer ausgeführt sein um diese Lücke zu schließen.

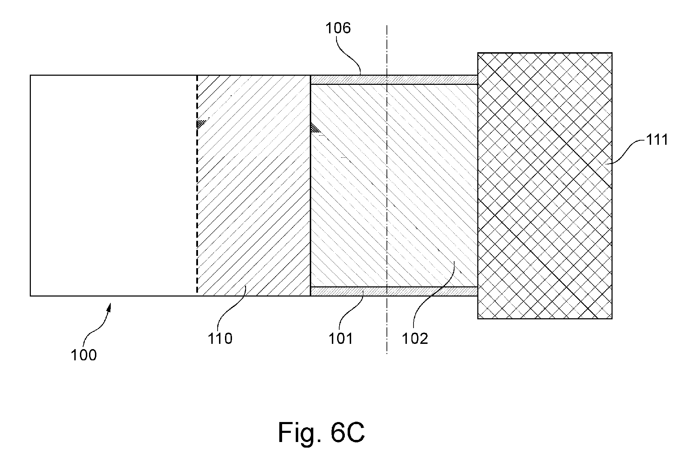

Fig. 6C zeigt einen Grundriss einer Anordnung gemäß einem weiteren Ausführungsbeispiel der Erfindung, bei welcher sich das Aufstiegsmodul 110 und auch die Galley über die gesamte Breite des Privatbereichs 102 erstrecken, so dass sich die beiden Sichtschutzrollos 101, 106 direkt seitlich daran anschließen. Zusätzliche Trennwände sind nicht erforderlich.

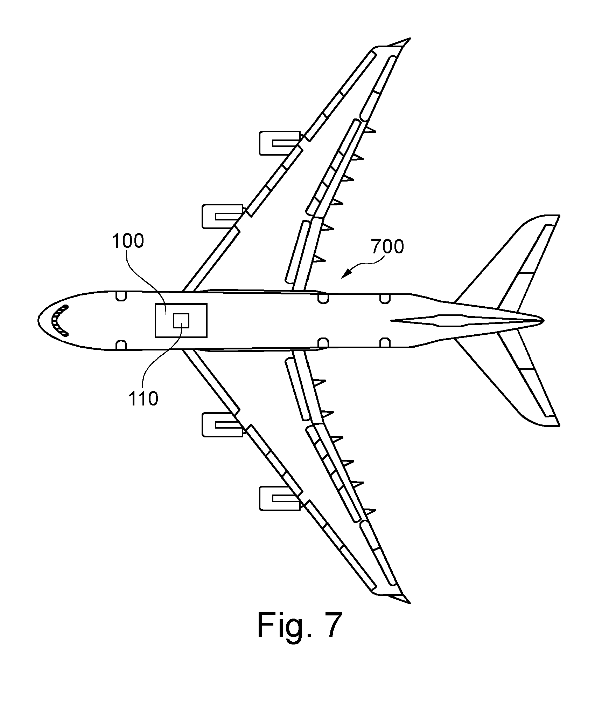

Fig. 7 zeigt ein Luftfahrzeug 700 mit einem Aufenthaltsmodul 100 gemäß einem Ausführungsbeispiel der Erfindung. Das Aufenthaltsmodul 100 kann auch in einem mittleren Bereich der Passagierkabine oder in einem Heckbereich der Passagierkabine, oder direkt an das Cockpit angrenzend, angeordnet sein.

Auch können mehrere solche Aufenthaltsmodule vorgesehen sein.

Ergänzend ist darauf hinzuweisen, dass "umfassend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Aufenthaltsmodul (100) für Mitglieder einer Transportmittelbesatzung und zur Anbringung in einem Scheitelbereich einer Transportmittelkabine, das Aufenthaltsmodul aufweisend:
linke und rechte Wandelemente (134, 135), ein oberes Deckenelement (139), Bodenelemente (131, 138) und
ein erstes Sichtschutzrollo (101), welches zum wahlweisen Einnehmen eines eingefahrenen Zustands und eines ausgefahrenen Zustands, bei dem das erste Sichtschutzrollo heruntergezogen ist, ausgeführt ist;
wobei das erste Sichtschutzrollo (101) im ausgefahrenen Zustand zur Ausbildung einer ersten visuellen Abtrennung eines ersten Gangbereichs (102) der Transportmittelkabine, bei dem es sich um zumindest einen Teil eines Quergangs zwischen zwei Längsgängen (108, 109) einer Luftfahrzeugkabine handelt, von einem zweiten Gangbereich (103) der Transportmittelkabine ausgeführt ist, wenn das Aufenthaltsmodul (100) in dem Scheitelbereich (104) der Transportmittelkabine (105) installiert ist;
wobei sich der erste Gangbereich (102) unterhalb des Aufenthaltsmoduls (100) befindet, wenn das Aufenthaltsmodul (100) in dem Scheitelbereich (104) der Transportmittelkabine (105) installiert ist; und
wobei sich der zweite Gangbereich (103) an den ersten Gangbereich (102) anschließt.

2. Aufenthaltsmodul (100) nach Anspruch 1, weiterhin aufweisend:
ein zweites Sichtschutzrollo (106), welches zum wahlweisen Einnehmen eines eingefahrenen Zustands und eines ausgefahrenen Zustands ausgeführt ist;
wobei das zweite Sichtschutzrollo (106) im ausgefahrenen Zustand zur Ausbildung einer zweiten visuellen Abtrennung des ersten Gangbereichs (102) von einem dritten Gangbereich (107) ausgeführt ist, wenn das Aufenthaltsmodul (100) in dem Scheitelbereich (104) der Transportmittelkabine (105) installiert ist;
wobei sich der dritte Gangbereich (107) an den ersten Gangbereich (102) anschließt.

3. Aufenthaltsmodul (100) nach einem der vorhergehenden Ansprüche, weiterhin aufweisend:
zwei Nuten (112) zum seitlichen Führen des ersten Sichtschutzrollos (101) oder des zweiten Sichtschutzrollos (106).

4. Aufenthaltsmodul (100) nach Anspruch 3,
wobei die zwei Nuten (112) in das Aufenthaltsmodul (100) eingefräst sind.

5. Aufenthaltsmodul (100) nach einem der vorhergehenden Ansprüche,
wobei das Aufenthaltsmodul (100) eine äußere Oberfläche aufweist;
wobei das erste Sichtschutzrollo (101) und/oder das zweite Sichtschutzrollo (106) im eingefahrenen Zustand über zumindest einen Teilbereich der äußeren Oberfläche geschoben ist.

6. Aufenthaltsmodul (100) nach einem der vorhergehenden Ansprüche, weiterhin aufweisend:
eine rechte Spaltabdeckung (502) und eine linke Spaltabdeckung (501), die beim Überführen des Sichtschutzrollos (101, 106) von dem eingefahrenen Zustand in den ausgefahrenen Zustand in dem Sichtschutzrollo (101, 106) integriert sind;
wobei die rechte Spaltabdeckung (502) und die linke Spaltabdeckung (501) nach dem Einnehmen des ausgefahrenen Zustands des Sichtschutzrollos (101, 106) ausfahrbar sind, um einen rechten Spalt (402) und einen linken Spalt (401) zwischen dem Sichtschutzrollo (101, 106) und daneben angeordneten Monumenten (110, 111) abzudichten.

7. Aufenthaltsmodul (100) nach einem der vorhergehenden Ansprüche,
wobei es sich bei dem Sichtschutzrollo (101, 106) um ein flexibles Rollo handelt.

8. Aufenthaltsmodul (100) nach einem der vorhergehenden Ansprüche,
wobei das Sichtschutzrollo (101, 106) als Rollladen oder als Jalousie ausgebildet ist.

9. Anordnung mit einem Aufenthaltsmodul (100) nach einem der Ansprüche 1 bis 8, einem ersten Monument (110) und einem zweiten Monument (111).

10. Anordnung nach Anspruch 9,
wobei die beiden Monumente (110, 111) und die beiden Sichtschutzrollos (101, 106) im ausgefahrenen Zustand, gegebenenfalls zusammen mit weiteren Elementen, einen abgetrennten Bereich eingrenzen und definieren, der zum Kleidungswechsel eines Besatzungsmitglied verwendbar ist.

11. Anordnung nach Anspruch 9 oder 10,
wobei es sich bei dem ersten Monument (110) um ein Aufstiegsmodul für das Aufenthaltsmodul (100) und bei dem zweiten Monument (111) um eine Galley handelt.

12. Luftfahrzeug (700) mit einem Aufenthaltsmodul (100) nach einem der Ansprüche 1 bis 8 oder einer Anordnung nach einem der Ansprüche 9 bis 11.

## Claims

1. An accommodation module (100) for crewmembers of a transport means to be arranged in a crown area of a transport means cabin, the accommodation module comprising:
left and right wall elements (134, 135), an upper ceiling element (139), floor elements (131, 138) and
a first privacy roller blind (101) designed to be disposed in a retracted state and an extended state in which the first privacy roller blind is lowered;
wherein the first privacy roller blind (101) in the extended state establishes a first visual separation of a first aisle area (102) of the transport means cabin, which is at least a partial area of a cross aisle between two longitudinal aisles (108,109) of an aircraft cabin, from a second aisle (103) of the cabin of the transport means when the accommodation module (100) is disposed in the crown area (104) of the transport means cabin (105);
wherein the first aisle area (102) is located underneath the accommodation module (100) when the accommodation module (100) is disposed in the crown area (104) of transport means cabin (105); and
wherein the second aisle area (103) is adjacent to the first aisle area (102).

2. The accommodation module (100) of claim 1, further comprising:
a second privacy roller blind (106) designed to optionally assume a retracted state and an extended state;
wherein the second privacy roller blind (106) in the extended state is designed to establish a second visual separation of the first aisle area (102) from a third aisle area (107) when the accommodation module (100) is disposed in the crown area (104) of the transport means cabin (105);
wherein the third aisle area (107) adjoins the first aisle area (102).

3. The accommodation module (100) of one of the above claims, further comprising:
two grooves (112) for laterally guiding the first privacy roller blind (101) or the second privacy roller blind (106).

4. The accommodation module of claim 3,
wherein the two grooves (112) are milled into the accommodation module (100).

5. The accommodation module (100) of one of the above claims,
wherein the accommodation module (100) comprises an outer surface; wherein the first privacy roller blind (101) and/or the second privacy roller blind (106) is pushed over at least a partial area of the outer surface in the retracted state.

6. The accommodation module (100) of one of the above claims, further comprising:
a right gap cover (502) and a left gap cover (501), which are integrated into the privacy roller blind (101,106) when moving the privacy roller blind (101, 106) from the retracted state to the extended state;
wherein the right gap cover (502) and the left gap cover (501) can be extended after the privacy roller blind (101, 106) has reached an extended state, so as to obstruct a right gap (402) and a left gap (401) between the privacy roller blind (101, 106) and monuments situated adjacent to the blind (101, 106).

7. The accommodation module (100) of one of the above claims,
wherein the privacy roller blind (101, 106) is a flexible roller blind.

8. The accommodation module (100) of one of the above claims,
wherein the privacy roller blind (101, 106) is designed as a roller shutter or Venetian blind.

9. An arrangement with an accommodation module (100) of one of the claims 1 to 8, a first monument (110) and a second monument (111).

10. The arrangement of claim 9,
wherein the two monuments (110, 111) and the two privacy roller blinds (101, 106) in an extended state, optionally in combination with other elements, isolate and define a separated area that can be used by a crewmember to change clothes.

11. Arrangement of claim 9 or 10,
wherein the first monument (110) is a step-up module for getting into the accommodation module (100), and the second monument (111) is a galley.

12. An aircraft (700) with an accommodation module (100) of one of the claims 1 to 8 or with an arrangement of one of the claims 9 to 11.

## Revendications

1. Habitacle (100) pour des membres d'un équipage de moyen de transport et pour l'installation dans une zone de sommet d'une cabine de moyen de transport, l'habitacle présentant :
des éléments de paroi gauche et droit (134, 135), un élément de plafond supérieur (139), des éléments de plancher (131, 138), et un premier store de protection visuelle (101), réalisé pour occuper sélectivement un état de rentrée et un état de sortie, dans lequel le premier store de protection visuelle est abaissé ;
le premier store de protection visuelle (101) étant réalisé dans l'état de sortie pour une première séparation visuelle entre une première zone de couloir (102) de la cabine de moyen de transport, qui est au moins une partie d'un couloir transversal entre deux couloirs longitudinaux (108, 109) d'une cabine d'aéronef, et une deuxième zone de couloir (103) de la cabine de moyen de transport, lorsque l'habitacle (100) est installé dans la zone de sommet (104) de la cabine de moyen de transport (105) ;
la première zone de couloir (102) se situant au-dessous de l'habitacle (100), lorsque l'habitacle (100) est installé dans la zone de sommet (104) de la cabine de moyen de transport (105) ; et
la deuxième zone de couloir (103) se raccordant à la première zone de couloir (102).

2. Habitacle (100) selon la revendication 1, présentant en outre :
un second store de protection visuelle (106), réalisé pour occuper sélectivement un état de rentrée et un état de sortie ;
le second store de protection visuelle (106) étant réalisé dans l'état de sortie pour une seconde séparation visuelle entre la première zone de couloir (102) et une troisième zone de couloir (107), lorsque l'habitacle (100) est installé dans la zone de sommet (104) de la cabine de moyen de transport (105) ;
la troisième zone de couloir (107) se raccordant à la première zone de couloir (102).

3. Habitacle (100) selon l'une des revendications précédentes, présentant en outre :
deux gorges (112) pour le guidage latéral du premier store de protection visuelle (101) ou du second store de protection visuelle (106).

4. Habitacle (100) selon la revendication 3,
les deux gorges (112) étant fraisées dans l'habitacle (100).

5. Habitacle (100) selon l'une des revendications précédentes,
l'habitacle (100) présentant une surface extérieure ;
le premier store de protection visuelle (101) et/ou le second store de protection visuelle (106) étant poussés dans l'état de rentrée sur au moins une zone partielle de la surface extérieure.

6. Habitacle (100) selon l'une des revendications précédentes, présentant en outre :
un panneau droit (502) et un panneau gauche (501), qui sont intégrés dans le store de protection visuelle (101, 106) lors du transfert du store (101, 106) de l'état de rentrée dans l'état de sortie ;
le panneau droit (502) et le panneau gauche (501) pouvant être sortis, après que le store de protection visuelle (101, 106) ait occupé l'état de sortie, pour étanchéifier une fente droite (402) et une fente gauche (401) entre le store de protection visuelle (101, 106) et des modules (110, 111) juxtaposés.

7. Habitacle (100) selon l'une des revendications précédentes,
le store de protection visuelle (101, 106) étant un rouleau flexible.

8. Habitacle (100) selon l'une des revendications précédentes,
le store de protection visuelle (101, 106) étant réalisé sous forme de volet roulant ou de store vénitien.

9. Agencement avec un habitacle (100) selon l'une des revendications 1 à 8, un premier module (110) et un second module (111).

10. Agencement selon la revendication 9,
les deux modules (110, 111) et les deux stores de protection visuelle (101, 106) dans l'état de sortie, éventuellement avec d'autres éléments, délimitant et définissant une zone séparée, utilisable pour le changement de tenue d'un membre d'équipage.

11. Agencement selon l'une des revendications 9 et 10,
le premier module (110) étant un module de montée pour l'habitacle (100) et le second module (111) étant une cuisine.

12. Aéronef (700) avec un habitacle (100) selon l'une des revendications 1 à 8 ou un agencement selon l'une des revendications 9 à 11.
